Europäisches Patentamt

European Patent Office

Office européen des brevets

(11) Veröffentlichungsnummer: **0 369 417**
**A1**

(12) # EUROPÄISCHE PATENTANMELDUNG

(21) Anmeldenummer: **89121110.4**

(22) Anmeldetag: **15.11.89**

(51) Int. Cl.5: **F16C 17/10, F16C 35/02,**
**//F16B21/16**

(30) Priorität: **15.11.88 CH 4221/88**

(43) Veröffentlichungstag der Anmeldung:
**23.05.90 Patentblatt 90/21**

(84) Benannte Vertragsstaaten:
**DE FR GB IT SE**

(71) Anmelder: **KERN & CO. AG**

**CH-5001 Aarau(CH)**

(72) Erfinder: **Hoffman, Dieter**
**Gartenweg 2**
**CH-5033 Buchs(CH)**

(54) **Vorrichtung zur Führung einer Welle.**

(57) Eine Welle (1) ist in einem Lagerflansch (2) mittels Führungsstücken (4, 5) in axialer Richtung in Lage und Spiel einstellbar geführt. Die Führungs- stücke (4, 5) greifen in einen Einstich (3) der Welle (1) mit kegelförmigen Flanken (8, 9) ein, und jedes Führungsstück (4 bzw. 5) begrenzt durch radiales Einstellen die Lage einer Flanke (9 bzw. 8).

Fig. 1

EP 0 369 417 A1

## Vorrichtung zur Führung einer Welle

Die Erfindung betrifft eine Vorrichtung zur Führung einer Welle in einem Lager, wobei die Welle axial wirksame umlaufende Führungsflächen aufweist und am Lager fixierbare Führungsstücke vorhanden sind, welche als Anschläge für die Führungsflächen wirksam sind.

Es sind Lager für eine Welle bekannt, bei denen die Welle einen Einstich mit planen Seitenflanken aufweist und ein darin eingepasstes Führungsteil vorhanden ist. Bei diesen Lagern wird das zulässige Achsspiel durch enge Toleranzen bei der Fertigung oder durch ein entsprechend aufwendiges Einpassen des Führungssteiles eingehalten. Zur Lagejustierung sind entweder an der Auflagefläche des Führungsteiles Bearbeitungen vorzunehmen oder es sind entsprechende abstimmbare Unterlagen für dieses Teil vorzusehen. Diese Lösungen befriedigen nicht, wenn enge Toleranzen - z.B. bezüglich Lage und Spiel der Welle in Achsrichtung im Bereich 0,001 bis 0,1 mm - gefordert sind, weil der Aufwand zu gross ist.

Aufgabe der vorliegenden Erfindung ist es, eine Vorrichtung zur Führung einer Welle in einem Lager zu finden, bei welcher die axiale Führung in den geforderten engen Toleranzen ohne zusätzliche Bearbeitungen oder Abstimmarbeiten durch reines Justieren erreichbar ist.

Diese Aufgabe wird bei einer Führungsvorrichtung der eingangs genannten Art dadurch gelöst, dass die Führungsflächen gegenüber einer zur Wellenachse senkrechten Ebene in radialer Richtung geneigt verlaufen und dass die Führungsstücke in radialer Richtung verschieblich und am Lager feststellbar sind. Vorteilhafte Weiterbildungen sind Gegenstand der Unteransprüche.

Ein Ausführungsbeispiel der Erfindung wird im Folgenden anhand der Figuren der Zeichnung beschrieben. Es zeigen

Fig. 1 einen Mittelschnitt durch ein Lager, welches mit einer erfindungsgemässen Führungsvorrichtung ausgerüstet ist,

Fig. 2 einen Querschnitt durch das Lager gemäss Fig. 1 längs der Linie A-A,

Fig. 3 eine Detailansicht konvex gewölbter Flanken eines Einstiches der Welle,

Fig. 4 eine Detailansicht konkav gewölbter Flanken eines Einstiches der Welle,

Fig. 5 eine Detailansicht eines keilförmig ausgebildeten, radial verschieblichen Führungsstückes für die Welle,

Fig. 6 einen Detailschnitt eines kegelförmig konkav ausgebildeten, radial verschieblichen Führungsstückes für die Welle,

Fig. 7 einen Detailschnitt eines konkav gewölbt ausgebildeten, radial verschieblichen Führungsstückes für die Welle und

Fig. 8 eine Detailansicht eines konvex gewölbt ausgebildeten, radial verschieblichen Führungsstückes für die Welle.

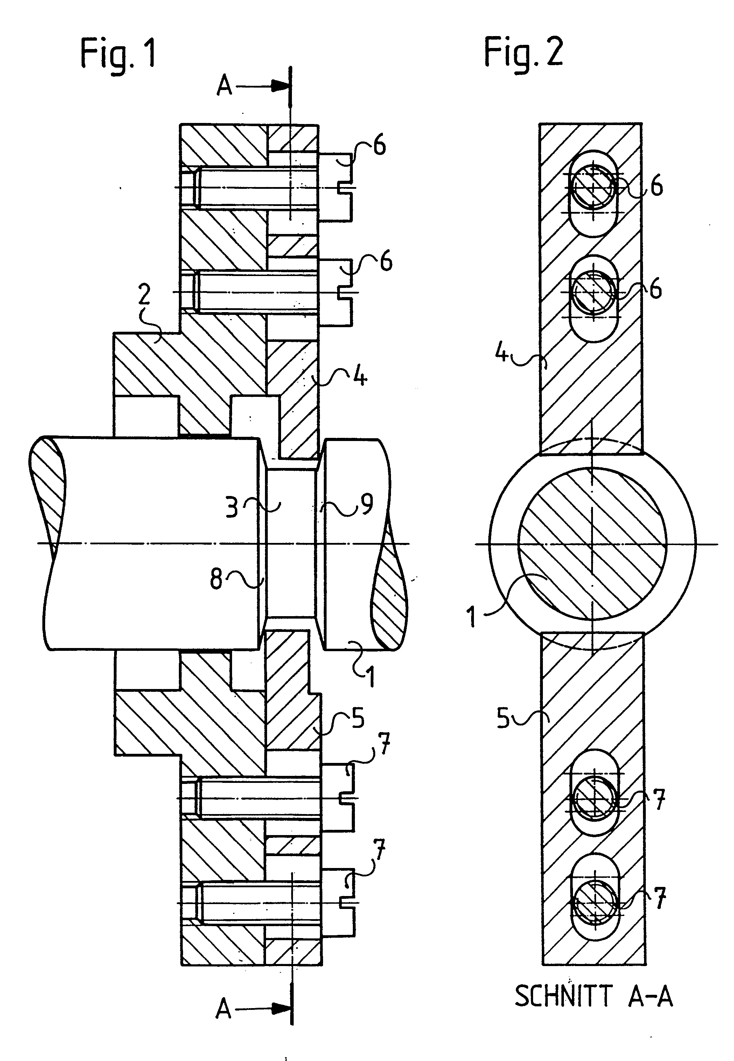

In Fig. 1 ist eine Welle 1 mit einem Lagerflansch 2 dargestellt. Am Lagerflansch 2 sind Führungsstücke 4 und 5 für die Welle 1 mit Schrauben 6 und 7 in Langlöchern radial einstellbar befestigt. Die Führungsstücke 4 und 5 greifen in einen Einstich 3 der Welle 1 ein. Die Flanken 8 und 9 des Einstiches 3 sind kegelförmig gegen die Achse der Welle 1 geneigt ausgeführt. Die Führungsstücke 4 und 5 sind so ausgeführt und montiert, dass das Führungsstück 4 die Lage der Flanke 9 und das Führungsstück 5 die Lage der Flanke 8 des Einstiches 3 axial begrenzt. Durch Verändern der radialen Lage der Führungsstücke 4 und 5 kann man somit die Lage der Welle 1 im Lagerflansch 2 sowie deren Spiel in axialer Richtung in die geforderten Toleranzen justieren.

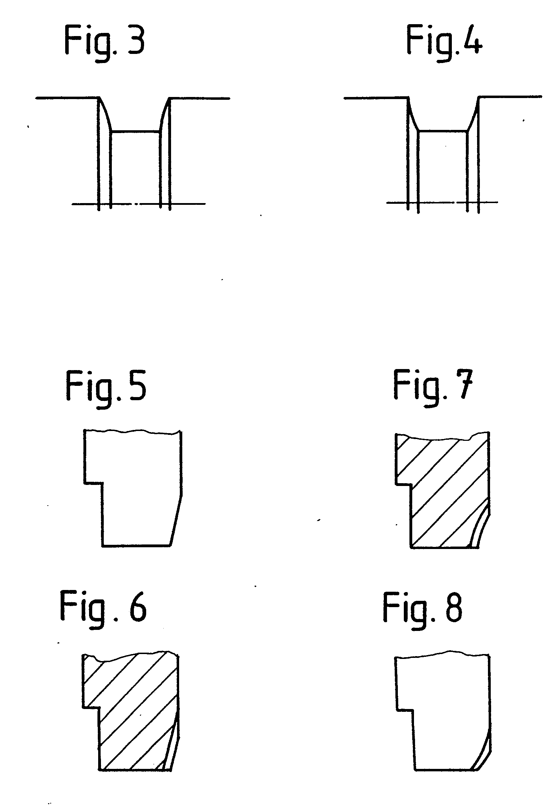

Die Erfindung ist nicht auf das vorstehend beschriebene Ausführungsbeispiel beschränkt. So können die Flanken 8, 9 des Einstiches 3 konvex gewölbt sein, wie in Fig. 3 dargestellt, oder konkav gewölbt, wie in Fig. 4 gezeigt. Auch können die Führungsstücke 4, 5 mit unterschiedlicher Formgebung an die Flanken 8, 9 des Einstiches 3 angepasst sein, um die Abnutzung zu vermindern und damit die Justierhaltigkeit über längere Zeit zu gewährleisten. Fig. 5 zeigt eine keilförmige Ausbildung der Führungsstücke 4, 5, Fig. 6 eine konkav kegelförmige, Fig. 7 eine konkave und Fig. 8 eine allgemeinere konvexe Ausbildung. Aus dem gleichen Grund können auch erfindungsgemässe Vorrichtungen vorteilhaft sein, bei denen auf eine und dieselbe Führungsfläche mehr als ein Führungsstück einwirkt.

## Ansprüche

1. Vorrichtung zur Führung einer Welle (1) in einem Lager (2), wobei die Welle axial wirksame umlaufende Führungsflächen (8, 9) aufweist und am Lager (2) fixierbare Führungsstücke (4, 5) vorhanden sind, welche als Anschläge für die Führungsflächen (8, 9) wirksam sind, dadurch gekennzeichnet, dass die Führungsflächen (8, 9) gegenüber einer zur Wellenachse senkrechten Ebene in radialer Richtung geneigt verlaufen und dass die Führungsstücke (4, 5) in radialer Richtung verschieblich und am Lager (2) feststellbar sind.

2. Vorrichtung gemäss Anspruch 1, dadurch gekennzeichnet, dass die Führungsflächen (8, 9) als Flanken eines umlaufenden Einstiches (3) in der Welle (1) ausgebildet sind und dass je ein radial verschiebliches Führungsstück (4, 5) die Lage je einer geneigten Flanke (8, 9) in axialer Richtung einstellbar begrenzt.

3. Vorrichtung gemäss Anspruch 2, dadurch gekennzeichnet, dass die Neigung der Flanken (8, 9) des umlaufenden Einstiches (3) gegenüber der zur Wellenachse senkrechten Ebene in radialer Richtung konstant ist.

4. Vorrichtung gemäss Anspruch 2, dadurch gekennzeichnet, dass die Neigung der Flanken (8, 9) des umlaufenden Einstiches (3) gegenüber der zur Wellenachse senkrechten Ebene in radialer Richtung nach aussen hin zunimmt.

5. Vorrichtung gemäss Anspruch 2, dadurch gekennzeichnet, dass die Neigung der Flanken (8, 9) des umlaufenden Einstiches (3) gegenüber der zur Wellenachse senkrechten Ebene in radialer Richtung nach aussen hin abnimmt.

6. Vorrichtung gemäss Anspruch 2, dadurch gekennzeichnet, dass die radial verschieblichen Führungsstücke (4, 5) im Bereich ihrer Berührungszone mit den Flanken des umlaufenden Einstiches (3) eine keilförmig abgeschrägte ebene Form aufweisen.

7. Vorrichtung gemäss Anspruch 2, dadurch gekennzeichnet, dass die radial verschieblichen Führungsstücke (4, 5) im Bereich ihrer Berührungszone mit den Flanken des umlaufenden Einstiches (3) kegelförmig konvex ausgebildet sind.

8. Vorrichtung gemäss Anspruch 2, dadurch gekennzeichnet, dass die radial verschieblichen Führungsstücke (4, 5) im Bereich ihrer Berührungszone mit den Flanken des umlaufenden Einstiches (3) eine konkave Form aufweisen.

9. Vorrichtung gemäss Anspruch 2, dadurch gekennzeichnet, dass die radial verschieblichen Führungsstücke (4, 5) im Bereich ihrer Berührungszone mit den Flanken des umlaufenden Einstiches (3) eine konvexe Form aufweisen.

10. Vorrichtung gemäss Anspruch 1, dadurch gekennzeichnet, dass mindestens einer Führungsfläche mehrere Führungsstücke zugeordnet sind.

EP 0 369 417 A1

# Fig. 1

A →

2

4

3   9

8

1

5

7

7

A →

# Fig. 2

6

6   6

4

1

5

7   7

7   7

SCHNITT A-A

EP 0 369 417 A1

Fig. 3

Fig.4

Fig. 5

Fig. 7

Fig. 6

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 281 604  (KIENZLE APPARATE GmbH) <br> * Seite 5, Zeilen 21-37; Figuren * <br> --- | 1,2,10 | F 16 C 17/10 <br> F 16 C 35/02 // <br> F 16 B 21/16 |
| Y | FR-A-2 585 787  (R. LE BEON) <br> * Insgesamt * <br> --- | 1,2,10 | |
| Y | DE-A-2 538 006  (ROLEX S.A.) <br> * Insgesamt * | 1,2,10 | |
| A |  | 3-9 | |
| | --- | | |
| A | DE-U-8 713 970  (ORENSTEIN & KOPPEL) <br> ----- | | |

| | |
|---|---|
| | **RECHERCHIERTE SACHGEBIETE (Int. Cl.5)** <br><br> F 16 C <br> F 16 B |

Der vorliegende Recherchenbericht wurde für alle Patentansprüche erstellt

| Recherchenort | Abschlußdatum der Recherche | Prüfer |
|---|---|---|
| DEN HAAG | 08-02-1990 | BEGUIN C.P. |

EPO FORM 1503 03.82 (P0403)